# EUROPEAN PATENT SPECIFICATION

(11) **EP 3 095 149 B1**
(45) Date of publication and mention of the grant of the patent: **09.05.2018**
(21) Application number: 14703550.5
(22) Date of filing: 17.01.2014
(51) Int. Cl.: H01M 8/0612, H01M 8/0662, H01M 8/04089, C01B 3/16, C01B 3/34, C25B 5/00, H01M 8/124

(54) **METHOD AND SYSTEM FOR PRODUCING CARBON DIOXIDE AND ELECTRICITY FROM A GASEOUS HYDROCARBON FEED**
VERFAHREN UND SYSTEM ZUR HERSTELLUNG VON KOHLENSTOFFDIOXID UND ELEKTRIZITÄT AUS EINEM GASFÖRMIGEN KOHLENWASSERSTOFFSTROM
PROCÉDÉ ET SYSTÈME DE PRODUCTION DE DIOXYDE DE CARBONE ET D'ÉLECTRICITÉ À PARTIR D'UNE MATIÈRE PREMIÈRE HYDROCARBURE GAZEUSE

(43) Date of publication of application: 23.11.2016
(73) Proprietor: EZ-Energies GmbH, 86150 Augsburg (DE)
(72) Inventor: DIETHELM, Stefan, CH-1680 Romont (CH); RAVAGNI, Alberto, CH-6340 Baar (CH); BUCHELI, Olivier, CH-6043 Adligenswil (CH)
(74) Representative: Dr. Graf & Partner AG
(86) International application number: PCT/EP2014/050898
(87) International publication number: WO 2015/106820

(56) References cited:
- US-A1- 2005 106 429
- US-A1- 2005 123 810
- US-A1- 2006 024 540
- US-A1- 2009 117 024

## Description

### Field of the Invention

The field of invention relates to a method and a system for producing carbon dioxide and electricity from a gaseous hydrocarbon feed using a SOFC unit.

### Background of the Invention

Enhanced Oil Recovery (EOR) is a generic term for techniques for increasing the amount of crude oil that can be extracted from an oil field. The term Enhanced Gas Recovery (EGR) is a generic term for techniques for increasing the amount of natural gas that can be extracted e.g. from a nearly depleted gas field. There currently are several different methods of Enhanced Oil Recovery including steam flood and water flood injection and hydraulic fracturing. Enhanced oil recovery extraction methods consume large quantities of water, natural gas and energy. Gas injection or miscible flooding is presently the most-commonly used approach in enhanced oil recovery. The fluid most commonly used for miscible displacement is carbon dioxide because it reduces the oil viscosity and is less expensive than liquefied petroleum gas. Carbon dioxide is particularly effective in reservoirs deeper than 600 m, where carbon dioxide will be in a supercritical state. In high pressure applications with lighter oils, carbon dioxide is miscible with the oil, with resultant swelling of the oil, and reduction in viscosity. Carbon Dioxide as a solvent has the benefit of being more economical than other similarly miscible fluids such as propane and butane.

Document US2006/0115691A1 discloses a method for exhaust gas treatment in a solid oxide fuel cell power plant with carbon dioxide capture, in which the unreacted fuel in the anode exhaust is recovered and recycled, while the resulting exhaust stream consists of highly concentrated carbon dioxide. One disadvantage of this method is that the method is less energy-efficient so that additional resources and products are needed to run the process. In addition this method is limited to a pressurized SOFC system only.

Document US2006/019138A1 discloses a fuel cell combined with a water gas shift membrane reactor.

### Technical Problem to be solved

The objective of the present invention is thus to provide a cheaper method and system for producing electrical power and carbon dioxide.

It is also an objective of the present invention to provide an energy-efficient method and system for producing electrical power and carbon dioxide, in particular clean and preferably pressurized carbon dioxide, suitable for enhanced oil recovery from a hydrocarbon feed.

### Summary of the Invention

The above-identified objectives are solved by a method comprising the features of claim 1 and more particular by a method comprising the features of claims 2 to 8. The above-identified objectives are further solved by a system comprising the features of claim 9 and more particular by a system comprising the features of claims 10 to 14.

The objective is in particular solved by a method for producing carbon dioxide and electricity from a gaseous hydrocarbon feed using a solid oxide fuel cell SOFC, the method comprising the steps of:
- introducing the gaseous hydrocarbon feed into the permeate side of a water gas shift membrane reactor, wherein the gaseous hydrocarbon feed is used as a sweep gas in the permeate side of the water gas shift membrane reactor, and wherein the sweep gas is hydrogen enriched in the permeate side of the water gas shift membrane reactor and leaves the water gas shift membrane reactor as a hydrogen enriched gaseous hydrocarbon feed,
- introducing steam,
- introducing the hydrogen enriched gaseous hydrocarbon feed into a reformer;
- in the reformer, generating a reformed process gas by at least partially converting methane and steam into carbon monoxide and hydrogen;
- introducing the reformed process gas into the anode side of the solid oxide fuel cell;
- in the solid oxide fuel cell, introducing air into the cathode side of the solid oxide fuel cell and converting hydrogen and carbon monoxide of the reformed process gas in combination with oxygen into an anode off-gas comprising steam, carbon dioxide and unconverted process gas;
- introducing the anode off-gas into the feed side of the water gas shift membrane reactor;
- in the feed side of the water-gas shift membrane reactor converting carbon monoxide and steam of the anode off gas into carbon dioxide and hydrogen and depleting the anode off-gas of hydrogen to create a carbon dioxide rich gas stream, and enriching the sweep gas with hydrogen.

The objective is further in particular solved by a system for producing carbon dioxide and electricity from a gaseous hydrocarbon feed using a solid oxide fuel cell SOFC , the system comprising:
- a water-gas shift membrane reactor,
- a reformer,
- the solid oxide fuel cell SOFC,
- an inlet for the gaseous hydrocarbon feed,
- an outlet for a carbon dioxide rich gas stream,
- wherein the water gas shift membrane reactor comprises a permeate side, a feed side, and a hydrogen selective membrane there between,
- wherein the permeate side having an input side and an exit side and the feed side having an input side and an exit side,
- wherein the inlet is fluidly connected with the input side of the permeate side,
- wherein the reformer is fluidly connected with the exit side of the permeate side and a steam feed, and wherein the reformer generates a reformed process gas by at least partially converting methane and steam into carbon monoxide and hydrogen;
- wherein the anode side of the solid oxide fuel cell is fluidly connected with the reformer for receiving the reformed process gas and for converting the reformed process gas in combination with oxygen into an anode off-gas comprising steam, carbon dioxide and unconverted reformed process gas;
- wherein the input side of the feed side of the water gas shift membrane reactor is fluidly connected with the solid oxide fuel cell for receiving the anode off-gas, and for converting carbon monoxide and steam into carbon dioxide and hydrogen in the feed side, and for separating the hydrogen through the membrane to create a hydrogen enriched gaseous feed on the permeate side, so that the anode off-gas is depleted of hydrogen and carbon monoxide to create the carbon dioxide rich gas stream comprising mainly carbon dioxide and steam on the feed side,
and wherein the exit side of the feed side is fluidly connected with the outlet.

The method according to the invention uses a water gas shift membrane reactor, wherein the gaseous hydrocarbon feed is used as the sweep gas in the permeate side of the water gas shift membrane reactor. The water gas shift membrane reactor comprises a high temperature hydrogen separation membrane unit, most preferably a palladium alloy based membrane. A palladium alloy based membrane means that the alloy may comprise further elements such as Silver or Copper. Alternative membranes compatible with the temperature and pressure ranges, and CO content are also suitable, in particular a Molecular sieve silica membrane. The hydrogen in the anode off-gas of the solid oxide fuel cell is transferred through the membrane by a hydrogen partial pressure difference, so that the anode off-gas is depleted of hydrogen. Fossil fuel, preferably natural gas, is preferably pretreated to remove poisons such as sulphur compounds, before such a gaseous hydrocarbon feed is fed into the water gas shift membrane reactor. In the water gas shift membrane reactor, the gaseous hydrocarbon feed is used as a sweep gas on the permeate side of the membrane, to increase the driving force, so that the sweep gas is enriched with hydrogen, and the anode off-gas on the feed side of the water gas shift reactor is depleted with hydrogen. This allows producing carbon dioxide, in particular concentrated carbon dioxide, and allows producing electricity from a gaseous hydrocarbon feed.

To increase the driving force in the membrane, in addition to the gaseous hydrocarbon feed, also steam may be added to the gaseous hydrocarbon feed.

The hydrogen enriched gaseous hydrocarbon feed leaving the water gas shift membrane reactor is then converted by steam reforming to a mixture of H₂, CO, CO₂ and H₂O. This mixture enters the solid oxide fuel cell at the anode side. Oxygen in the air is transferred through the solid oxide fuel cell and reacts electrochemically with H₂ and CO, thereby generating electricity and heat. The anode off-gas is fed into the Water gas shift membrane reactor, where the water-gas shift reaction converts CO and H₂O into CO₂ and H₂, whereby the H₂ is transferred through the membrane so that the anode off-gas is depleted from hydrogen, and the gaseous hydrocarbon feed is enriched with hydrogen. The anode off-gas is therefore purified, and the CO₂ content is increased. The hydrogen depleted from the anode off-gas is recirculated to the reformer and the fuel cell, where it is efficiently utilized to generate electricity.

One advantage of the method according to the invention is that hydrogen is removed from the anode-off gas of the solid oxide fuel cell, so that the CO contained in the anode-off gas is fully converted to CO₂. In addition, hydrogen is thereby transferred to the fuel and recycled in the solid oxide fuel cell, which increases the fuel conversion and the efficiency of the solid oxide fuel cell. In addition the heat produced by the exothermic water gas shift reaction is transferred to the gaseous hydrocarbon feed and thereby contributes to the pre-heating of the gaseous hydrocarbon feed.
In the most basic embodiment of the SOFC system according to the invention, beside the hydrocarbon feed, air and steam, no additional input is needed to run the method. The system according to the invention is very easy to handle and very convenient to run, because no expensive infrastructure and additional supply is required.

Various objects, features, aspects and advantages of the present invention will become more apparent from the following detailed description of preferred embodiments of the invention, along with the accompanying drawings in which like numerals represent like components.

### Brief Description of the Drawings

- Fig. 1: shows a process flow diagram of a first embodiment of the invention;
- Fig. 2: shows a water gas shift membrane reactor;
- Fig. 3: shows a process flow diagram of a second embodiment of the invention;
- Fig. 4: shows a process flow diagram of a third embodiment of the invention;
- Fig. 5: shows a process flow diagram of a forth embodiment of the invention;
- Fig. 6: shows a separation system to separate carbon dioxide.

### Description of preferred Embodiments

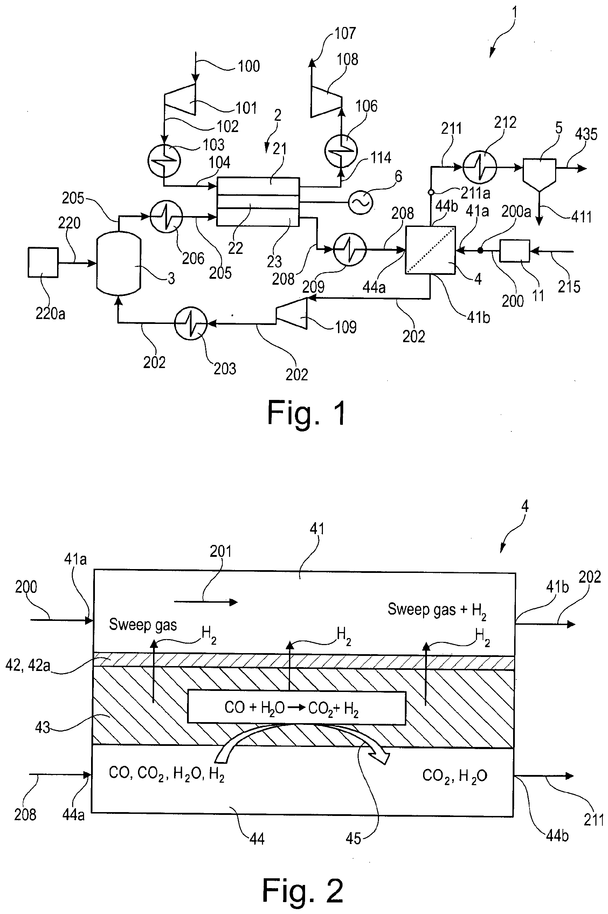

Figure 1 shows the main principles of the present system 1 and method for producing carbon dioxide 435 and electricity from a gaseous hydrocarbon feed 200. Poison-free fuel containing the element carbon, typically natural gas 215, is fed as a gaseous hydrocarbon feed 200 into the permeate side of a water gas shift membrane reactor 4. The natural gas 215 is preferably entering a fuel pretreatment unit 11, which contains all necessary poison removal steps to produce a fuel that is sufficiently clean to be suitable for a reformer 3, a solid oxide fuel cell 2 and a water gas shift membrane reactor 4. Typically the pretreatment unit 11 would consist of desulphurisation by one of the conventional methods known to those skilled in the art, to create the gaseous hydrocarbon feed 200.

Figure 2 schematically shows a water gas shift membrane reactor 4 as used in the embodiments according to figures 1, 3, 4 and 5. The water gas shift membrane reactor 4 comprises a first flow path 41, which is the permeate side 41, having an input side 41a and an exit side 41b, and a second flow path 44, which is the feed side 44, having an input side 44a and an exit side 44b. Both sides are separated by a membrane 42, which is a Pd membrane 42a. The second flow path 44 comprises a catalyst 43, respectively a catalyst bed, so that the water gas shift reaction 45 may take place, as indicated in figure 2. The anode off-gas 208 typically consisting of CO, CO₂, H₂O and H₂ enters the second flow path 44 of the water gas shift membrane reactor 4, where a separation process takes place, where the main aim is to convert CO to CO₂ and separate the CO₂ and H₂O from the unspent fuel. H₂ is passing the membrane 42, and CO₂ and H₂O is leaving the second flow path 44 of the water gas shift membrane reactor 4 as a carbon dioxide rich gas stream 211. The gaseous hydrocarbon 200 entering the first flow path 41 is used as a sweep gas 201 on the permeate side to increase the driving force on membrane 42. The sweep gas 201 is hydrogen enriched in the first flow path 41 of the water gas shift membrane reactor 4 and leaves the reactor 4 as a hydrogen enriched gaseous hydrocarbon feed 202 so that the hydrogen is recirculated to the reformer 3 and the solid oxide fuel cell 2, where it is efficiently utilized to generate electricity.

The water gas shift membrane reactor 4 comprises a water-gas-shift reactor in combination with Palladium membrane42a, so that the water gas shift membrane reactor 4 combines a water-gas-shift catalyst with a H₂ separation membrane. The function of the separation membrane 42 is to remove H₂ from the reactor and thereby displace the equilibrium of reaction (CO + H₂O =CO₂ + H₂) towards the reaction products. This enables to obtain a gas mixture comprising mainly steam and CO₂. The remaining consists of traces of CH₄, CO and H₂. The separation membrane 42 should preferably operate at the same temperature as the water-gas-shift reactor. The separation membrane 42 is preferably a dense Pd-based membrane. The use of a Pd-based membrane for H₂ separation coupled with a water-gas-shift reactor has the advantage that pure hydrogen may be produced from hydrocarbons. The Pd-based membrane 42a requires a H₂ partial pressure driving force for H₂ separation. This is obtained by using a sweep gas 201 on the permeate side. The driving force for H₂ separation may be further increased by pressurizing the fluid on the feed side 44 of the water gas shift membrane reactor 4. The pressure of the fluid on the feed side 44 is preferably increased by a compressor 109. The driving force is preferably adapted such that the recovery of hydrogen from the anode off-gas 208 reaches more than 90%. This may be achieved by controlling the temperature of the water gas shift membrane reactor 4 and/or the space velocity of the feed gas 208 within the feed side 44 of the water gas shift membrane reactor 4. The space velocity refers to the quotient of the entering volumetric flow rate of the feed gas 208 divided by volume of the catalyst bed 43. The conversion of carbon monoxide into carbon dioxide preferably reaches more than 95%. This may be achieved by controlling the temperature of the water gas shift membrane reactor 4 and/or the flow rate of the sweep gas 201. The Pd-based membrane 42a has the advantage that it shows high thermal stability and is tolerant towards CO. The use of the gaseous hydrocarbon feed 200 as the sweep gas has the advantage that is simplifies the hydrogen recycling to the solid oxide fuel cell 2. The H₂ partial pressure difference is maintained low on the permeate side of the membrane 42 by using a sweep gas 201 that is thereby enriched in hydrogen. In an advantageous method, the removal of H₂ from the water-gas-shift favors the complete conversion of CO to CO₂ in the presence of steam. Therefore, the carbon dioxide rich gas stream 211 contains mainly steam and CO₂. As the WGS reaction is exothermic, the produced heat can advantageously be transferred through the membrane 42 to the sweep gas 201, which is the gaseous hydrocarbon feed 200, for pre-heating the gaseous hydrocarbon feed 200.

Figure 2 shows a co-flow configuration but a counter-flow configuration might also be advantageous.

As disclosed in figure 1, the hydrogen enriched gaseous hydrocarbon feed 202 is compressed in compressor 109 to an operating pressure in the range of preferably 4 to 8 bars, to increase the pressure of the fluid on the feed side 44, after the compressor 109 the enriched gaseous hydrocarbon feed 202 is heated in heat exchanger 203, and fed to the reformer 3 to generate reformed process gas 205, whereby in the embodiment according to figure 1, also steam 220 is fed to the reformer 3. The reaction in the reformer 3 preferably takes place in the presence of a reforming catalyst in a temperature range of 500 to 800 °C. The reformed process gas 205 is heated in heat exchanger 206 and is fed to the anode side 23 of the solid oxide fuel cell SOFC 2. The anode off-gas 208 leaving the solid oxide fuel cell 2 is cooled in heat exchanger 209 to for example about 300°C, and is fed into the water gas shift membrane reactor 4.

The solid oxide fuel cell 2 also comprises a cathode side 21 as well as an electrolyte 22. The solid oxide fuel cell 2 keeps the air stream 100 and the reformed process gas 205 separated, so that they do not mix. No further details of the solid oxide fuel cell 2 are shown. Air 100 is compressed in compressor 101 to compressed cold air 102, is heated in heat exchanger 103 to pre-heated air 104 and is then fed to the cathode side 21 of the solid oxide fuel cell 2. The air 100 is preferably compressed to the same or about the same operating pressure as the pressure of the reformed process gas 205, so that there is no pressure difference in the solid oxide fuel cell 2 between the cathode side 21 and the anode side 23. A hot depleted air stream 114 leaving the cathode side 21 of the solid oxide fuel cell 2 is cooled in heat exchanger 106, is expanded in expander 108 and is vented as depleted air 107. Electricity produced by the solid oxide fuel cell 2 is converted from DC to AC in inverter 6. The carbon dioxide rich gas stream 211 leaving the feed side 44 of the water gas shift membrane reactor 4 is cooled in heat exchanger 212 and is fed to a CO₂ conditioning unit 5, which at least separates water 411 from the carbon dioxide rich gas stream 211 and preferably compresses the gas stream to create a compressed carbon dioxide 435.

The system 1 disclosed in figure 1 comprises:
- a water-gas shift membrane reactor 4,
- a reformer 3,
- the solid oxide fuel cell SOFC 2,
- an inlet 200a for the gaseous hydrocarbon feed 200,
- an outlet 211a for a carbon dioxide rich gas stream 211,
- wherein the water gas shift membrane reactor 4 comprises a permeate side 41, a feed side 44, and a hydrogen selective membrane 42 there between,
- wherein the permeate side 41 having an input side 41a and an exit side 41b and the feed side 44 having an input side 44a and an exit side 44b,
- wherein the inlet 200a is fluidly connected with the input side 41a of the permeate side 41,
- wherein the reformer 3 is fluidly connected with the exit side 41b of the permeate side 41 and a steam feed 220, and wherein the reformer 3 generates a reformed process gas 205 by at least partially converting methane and steam into carbon monoxide and hydrogen;
- wherein the solid oxide fuel cell 2 is fluidly connected with the reformer 3 for receiving the reformed process gas 205 and for converting the reformed process gas 205 in combination with oxygen into an anode off-gas 208 comprising steam, carbon dioxide and unconverted reformed process gas 205;
- wherein the input side 44a of the feed side 44 of the water gas shift membrane reactor 4 is fluidly connected with the solid oxide fuel cell 1 for receiving the anode off-gas 208, and for converting carbon monoxide and steam into carbon dioxide and hydrogen in the feed side 44, and for separating the hydrogen through the membrane 42 to create a hydrogen enriched gaseous feed 202 on the permeate side 41, so that the anode off-gas 208 is depleted of hydrogen and carbon monoxide to create the carbon dioxide rich gas stream 211 comprising mainly carbon dioxide and steam on the feed side 44, and wherein the exit side 44b of the feed side 44 is fluidly connected with the outlet 211a.

Steam 220 is provided by with a steam generating unit 220a and is fed into system 1.

The embodiment disclosed in figure 1 is preferably suitable for a planar type solid oxide fuel cell SOFC 2, thereby the hydrogen enriched gaseous feed 202 and the air 100 are preferably compressed such that the pre-headed air 104 on the cathode side 21 and the reformate 205 on the anode side 23 have the same or about the same pressure.

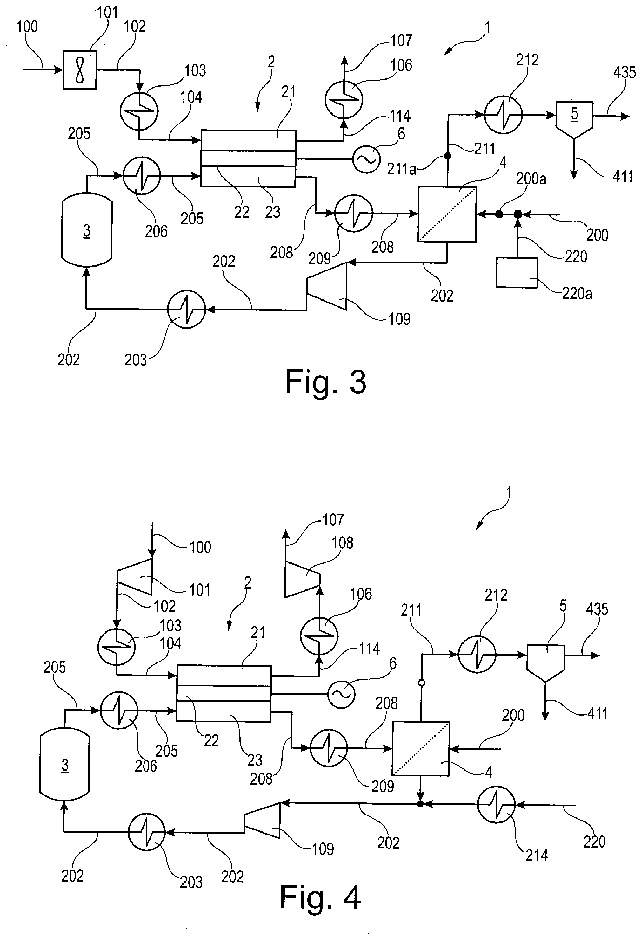

Figure 3 shows a further embodiment. In contrast to the embodiment disclosed in figure 1, steam 220 is added to the gaseous hydrocarbon feed 200 before entering the water gas shift membrane reactor 4 as a sweep gas 201. In a further embodiment and as disclosed in figure 3, no compressors 101, 108 are used. Instead, a blower 101 is used. Such an embodiment is in particular suitable in combination with a tubular fuel cell design. The advantage of adding steam 220 to the gaseous hydrocarbon feed 200 before entering the water gas shift membrane reactor 4 is that the volumetric sweep gas flow rate on the permeate side 41 is thereby increased, preferably by a factor 3 to 5, which corresponds to a steam to carbon ratio of 2 to 4. The advantage of such an increased sweep gas 201 volumetric flow rate is, that the compression of stream 202 in compressor 109 may be reduced, for example by a factor of 1.3 to 2, which saves compression energy. The hydrogen permeation flow through the membrane 43 depends on the hydrogen partial pressure difference across the membrane 43. The hydrogen partial pressure difference is proportional to sqrt[p(H₂)_{feed}]-sqrt[p(H₂)ₚₑᵣₘ], where p(H₂)_{feed} is the hydrogen partial pressure on the feed side 44 of the water gas shift membrane reactor 4 and p(H₂)ₚₑᵣₘ is the hydrogen partial pressure on the permeate side 41. The hydrogen partial pressure p(H₂)_{feed} is directly proportional to the compression ratio achieved by the compressor 109, whereas the hydrogen partial pressure on the permeate side p(H₂)ₚₑᵣₘ is inversely proportional to the sweep gas volumetric flow rate. Therefore, increasing the sweep gas volumetric flow rate will reduce p(H₂)ₚₑᵣₘ and consequently increase the driving force for the hydrogen permeation flow. On the other hand, if the permeation flow is kept at a constant value, increasing the sweep gas volumetric flow rate will allow to reduce p(H₂)_{feed} and thereby the pressure ratio at the compressor 109, which allows saving compression energy

Figure 4 shows a further embodiment. In contrast to the embodiment disclosed in figure 1, steam 220 is heated in heat exchanger 214 and added to the hydrogen enriched gaseous feed 202.

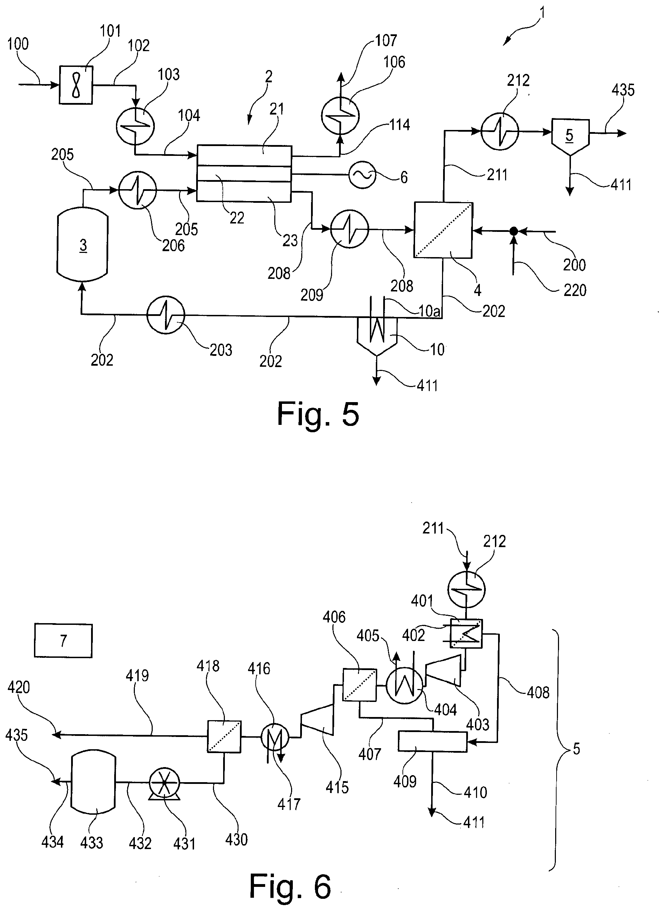

Figure 5 shows a further embodiment. In contrast to the embodiment disclosed in figure 1, steam 220 is added to the gaseous hydrocarbon 200 before entering the water gas shift membrane reactor 4 as a sweep gas 201. In addition no compressors 101, 109 are used. To achieve a sufficient hydrogen partial pressure at the palladium based membrane 42a, which is required to drive the separation of hydrogen through membrane 42a, excess steam 220 is used. A steam to carbon ratio of at least 15 is used in the sweep gas 201, instead of a ratio of 2 to 3, which is preferably required for the steam reforming reaction in reformer 3. The steam to carbon ratio corresponds to the number of steam molecules divided by the number of carbon atoms. In the embodiment according to figure 5, the excess steam 220 is partially condensed in condenser 10 by using a cooler 10a, so that some water 411 is separated from the hydrogen enriched gaseous feed 202 before the hydrogen enriched gaseous feed 202 enters the reformer 3. The advantage of this embodiment is that a sufficient hydrogen partial pressure difference may be achieved in the water gas shift membrane reactor 4 without the need of compressing the hydrogen enriched gaseous feed 202 and the air stream 100.

Figure 6 shows an embodiment of a CO₂ conditioning unit 5. The carbon dioxide rich gas stream 211 is routed to a conditioning unit 5 consisting of a series of compression and cooling steps to separate at least water and carbon dioxide and residual gases. The carbon dioxide rich gas stream 211 is cooled in heat exchanger 212 and thereafter enters a water separator 401 with auxiliary cooling 402, wherein water condensate 408 is separated. The remaining cooled carbon dioxide rich gas stream 211 is then compressed in a compressor 403, cooled in a heat exchanger 404 with auxiliary cooling 405 and then introduced in a further water separator 406, wherein water condensate 407 is separated. The separated water 407, 408 is collected in a water tank 409 and the water 411 may be available at a water outlet 410. The remaining cooled carbon dioxide rich gas stream 211 is compressed in a compressor 415, cooled in a heat exchanger 416 with auxiliary cooling 417 and flowing in an optional separator 418, wherein the fluid is separated into a residual gas 420, which may be available at a compressed residual gas outlet 419, and into a supercritical carbon dioxide 430, which by a pump 431 and conduit 432 is pumped into a carbon dioxide storage tank 433. The compressed carbon dioxide 435 may be available at a carbon dioxide outlet 434. By way of example, the cooled carbon dioxide rich gas stream 211 may have a pressure of 10 bar when leaving the compressor 403, and may have a pressure of 80 bar when leaving the compressor 415, so that the residual gases 420 have a pressure of 80 bar, whereby the carbon dioxide is further compressed by pump 431, so that the compressed carbon dioxide 435 may have a pressure of 150 bar. Figure 6 also shows a control unit 7 to control the system 1 and or the conditioning unit 5.

## Claims

1. A method for producing concentrated carbon dioxide (435) and electricity from a gaseous hydrocarbon feed (200) using a solid oxide fuel cell SOFC (2), the method comprising the steps of:
- introducing a hydrogen enriched gaseous hydrocarbon feed (202) into a reformer (3),
- introducing steam (220);
- in the reformer (3), generating a reformed process gas (205) by at least partially converting methane and steam (220) into carbon monoxide and hydrogen;
- introducing the reformed process gas (205) into an anode side of the solid oxide fuel cell (2);
- in the solid oxide fuel cell (2), introducing air (100) into a cathode side of the solid oxide fuel cell (2) and converting hydrogen and carbon monoxide of the reformed process gas (205) in combination with oxygen into an anode off-gas (208) comprising steam, carbon dioxide and unconverted process gas;
**characterized in**
- introducing the gaseous hydrocarbon feed (200) into a permeate side (41) of a water gas shift membrane reactor (4), wherein the gaseous hydrocarbon feed (200) is used as a sweep gas (201) in the permeate side (41) of the water gas shift membrane reactor (4), and wherein the sweep gas (201) is hydrogen enriched in the permeate side (41) of the water gas shift membrane reactor (4) and leaves the water gas shift membrane reactor (4) as the hydrogen enriched gaseous hydrocarbon feed (202),
- introducing the anode off-gas (208) into a feed side (44) of the water gas shift membrane reactor (4); and
- in the feed side (44) of the water-gas shift membrane reactor (4) converting carbon monoxide and steam of the anode off gas (208) into concentrated carbon dioxide and hydrogen and depleting the anode off-gas (208) of hydrogen to create a carbon dioxide rich gas stream (211), and enriching the sweep gas (201) with hydrogen.

2. The method of claim 1, wherein steam (220) is added to the gaseous hydrocarbon feed (200).

3. The method of claim 1, wherein steam (220) is introduced into the reformer (3).

4. The method of claim 1, wherein steam (220) is added to the hydrogen enriched gaseous hydrocarbon feed (202).

5. The method of one of the preceding claims, wherein the hydrogen enriched gaseous hydrocarbon feed (202) is compressed to an operating pressure in the range of 2 to 8 bars before entering the reformer (3), and wherein the air (100) is preferably compressed to the same operating pressure before entering the solid oxide fuel cell (2).

6. The method of claim 2, wherein an amount of steam (220) is added with a steam to carbon ratio of at least 15, and wherein the hydrogen enriched gaseous hydrocarbon feed (202) is cooled after leaving the water gas shift membrane reactor (4) to condensate and separate an excess amount of water (411), so that the hydrogen enriched gaseous hydrocarbon feed (202) after condensation and separation has a steam to carbon ratio of 2 to 4.

7. The method of one of the preceding claims, wherein the water-gas shift membrane reactor (4) is an integrated water-gas shift membrane reactor (4) with a palladium alloy based membrane (42a) for selectively removing hydrogen from the anode off-gas (208).

8. The method of one of the preceding claims, wherein the carbon dioxide rich gas stream (211) is introduced into a separation system (5);
- in the separation system (5), separating steam from the carbon dioxide rich gas stream (211), wherein the carbon dioxide is compressed in a compressor (403, 415) to provide a compressed concentrated carbon dioxide (435).

9. A system for producing concentrated carbon dioxide (435) and electricity from a gaseous hydrocarbon feed (200) using a solid oxide fuel cell SOFC (2), the system comprising:
- a water-gas shift reactor (4),
- a reformer (3),
- the solid oxide fuel cell SOFC (2) comprising an anode side (23) and a cathode side (21),
- an inlet (200a) for the gaseous hydrocarbon feed (200),
- wherein the reformer (3) is fluidly connected with a hydrogen enriched gaseous hydrocarbon feed (202) and a steam feed (220), and wherein the reformer (3) generates a reformed process gas (205) by at least partially converting methane and steam into carbon monoxide and hydrogen;
- wherein the anode side (23) of the solid oxide fuel cell (2) is fluidly connected with the reformer (3) for receiving the reformed process gas (205) and for converting the reformed process gas (205) in combination with oxygen into an anode off-gas (208) comprising steam, carbon dioxide and unconverted reformed process gas (205);
**characterized in that**
- the water gas shift reactor (4) is a water gas shift membrane reactor (4),
- that there is an outlet (211a) for a carbon dioxide rich gas stream (211),
- that the water gas shift membrane reactor (4) comprises a permeate side (41), a feed side (44), a catalyst (43) and a hydrogen selective membrane (42) between the permeate side (41) and the feed side (44),
- that the permeate side (41) having an input side (41a) and an exit side (41b) and the feed side (44) having an input side (44a) and an exit side (44b),
- that the inlet (200a) is fluidly connected with the input side (41a) of the permeate side (41),
- that the exit side (41b) of the permeate side (41) providing the hydrogen enriched gaseous hydrocarbon feed (202) and being fluidly connected with the reformer (3),
- that the input side (44a) of the feed side (44) of the water gas shift membrane reactor (4) is fluidly connected with the solid oxide fuel cell (1) for receiving the anode off-gas (208), and for converting carbon monoxide and steam into concentrated carbon dioxide and hydrogen in the feed side (44), and for separating the hydrogen through the membrane (42) to create a hydrogen enriched gaseous feed (202) on the permeate side (41), so that the anode off-gas (208) is depleted of hydrogen and carbon monoxide to create the carbon dioxide rich gas stream (211) comprising mainly carbon dioxide and steam on the feed side (44),
and that the exit side (44b) of the feed side (44) is fluidly connected with the outlet (211a).

10. The system of claim 9, wherein a compressor (109) is arranged between the water gas shift membrane reactor (4) and the reformer (3), so that the exit side (41b) of the permeate side (41) is fluidly connected with the compressor (109), and that the reformer (3) is fluidly connected with the exit side of the compressor (109).

11. The system of claim 9, wherein a condenser (10) is arranged between the water gas shift membrane reactor (4) and the reformer (3), so that the exit side (41b) of the permeate side (41) is fluidly connected with the condenser (10), and that the reformer (3) is fluidly connected with the exit side of the condenser (10).

12. The system of one of claim 9 to 11, wherein the membrane (42) is a palladium alloy based membrane (42a) for selectively removing hydrogen.

13. The system of one of claims 9 to 12, wherein the input side (41a) of the permeate side (41) of the water gas shift membrane reactor (4) is also fluidly connected with a steam providing unit (220a).

14. The system of one of claims 9 to 13, wherein a separation system (5) is fluidly connected with the exit side (44b) of the feed side (44) of the water-gas shift membrane reactor (4), to introduce the carbon dioxide rich gas stream (211) into the separation system (5) to separate steam from the carbon dioxide rich gas stream (211) to provide the concentrated carbon dioxide (435).

## Patentansprüche

1. Verfahren zur Herstellung von konzentriertem Kohlendioxid (435) und Elektrizität aus einer gasförmigen Kohlenwasserstoffeinspeisung (200) unter Verwendung einer Festoxidbrennstoffzelle SOFC (2), wobei das Verfahren die folgenden Schritte umfasst:
- Einführen einer wasserstoffangereicherten gasförmigen Kohlenwasserstoffeinspeisung (202) in einen Reformer (3),
- Einleitung von Dampf (220);
- in dem Reformer (3), Erzeugen eines reformierten Prozessgases (205) durch zumindest teilweise Umwandlung von Methan und Dampf (220) in Kohlenmonoxid und Wasserstoff;
- Einleiten des reformierten Prozessgases (205) in eine Anodenseite der Festoxidbrennstoffzelle (2);
- in der Festoxidbrennstoffzelle (2), Einleiten von Luft (100) in eine Kathodenseite der Festoxidbrennstoffzelle (2) und Umwandeln von Wasserstoff und Kohlenmonoxid des reformierten Prozessgases (205) in Kombination mit Sauerstoff in ein Anodenabgas (208), das Dampf, Kohlendioxid und nicht konvertiertes Prozessgas umfasst;
**gekennzeichnet durch**
- Einführen der gasförmigen Kohlenwasserstoffeinspeisung (200) in eine Permeatseite (41) eines Wassergas-Shift-Membranreaktors (4), wobei die gasförmige Kohlenwasserstoffeinspeisung (200) als Sweepgas (201) in der Permeatseite (41) des Wassergas-Shift-Membranreaktors (4) verwendet wird, und wobei das Sweepgas (201) in der Permeatseite (41) des Wassergas-Shift-Membranreaktors (4) mit Wasserstoff angereichert wird und den Wassergas-Shift-Membranreaktor (4) als die wasserstoffangereicherte gasförmige Kohlenwasserstoffeinspeisung (202) verlässt,
- Einleiten des Anodenabgases (208) in eine Einspeiseseite (44) des Wassergas-Shift-Membranreaktors (4); und
- in der Einspeiseseite (44) des Wassergas-Shift-Membranreaktors (4), umwandeln von Kohlenmonoxid und Dampf des Anodenabgases (208) in konzentriertes Kohlendioxid und Wasserstoff und abreichern des Anodenabgases (208) von Wasserstoff, um einen kohlendioxidreichen Gasstrom (211) zu erzeugen, und das Sweepgas (201) mit Wasserstoff anreichern.

2. Verfahren nach Anspruch 1, wobei der gasförmigen Kohlenwasserstoffeinspeisung (200) Dampf (220) zugegeben wird.

3. Verfahren nach Anspruch 1, wobei Dampf (220) in den Reformer (3) eingeleitet wird.

4. Verfahren nach Anspruch 1, wobei der wasserstoffangereicherten gasförmigen Kohlenwasserstoffeinspeisung (202) Dampf (200) zugegeben wird.

5. Verfahren eines der vorstehenden Ansprüche, wobei die wasserstoffangereicherte gasförmige Kohlenwasserstoffeinspeisung (202) vor dem Eintritt in den Reformer (3) auf einen Betriebsdruck im Bereich von 2 bis 8 bar komprimiert wird, und wobei die Luft (100) vor dem Eintritt in die Festoxidbrennstoffzelle (2) vorzugsweise auf denselben Betriebsdruck komprimiert wird.

6. Verfahren nach Anspruch 2, wobei eine Dampfmenge (220) mit einem Dampf zu Kohlenstoff-Verhältnis von mindestens 15 zugegeben wird, und wobei dem die wasserstoffangereicherte gasförmige Kohlenwasserstoffeinspeisung (202) nach dem Verlassen des Wassergas-Shift-Membranreaktors (4) gekühlt wird, um eine überschüssige Wassermenge (411) zu kondensieren und abzutrennen, so dass die wasserstoffangereicherte gasförmige Kohlenwasserstoffeinspeisung (202) nach Kondensation und Trennung ein Dampf zu Kohlenstoff- Verhältnis von 2 bis 4 aufweist.

7. Verfahren nach einem der vorhergehenden Ansprüche, wobei der Wassergas-Shift-Membranreaktor (4) ein integrierter Wassergas-Shift-Membranreaktor (4) mit einer Membran (42a) auf Palladiumlegierungsbasis zur selektiven Entfernung von Wasserstoff aus dem Anodenabgas (208) ist.

8. Verfahren nach einem der vorstehenden Ansprüche, wobei der kohlendioxidreiche Gasstrom (211) in ein Trennsystem (5) eingeführt wird;
- in dem Trennsystem (5), Abtrennen von Dampf aus dem kohlendioxidreichen Gasstrom (211), wobei das Kohlendioxid in einem Kompressor (403, 415) komprimiert wird, um ein komprimiertes konzentriertes Kohlendioxid (435) bereitzustellen.

9. System zur Herstellung von konzentriertem Kohlendioxid (435) und Elektrizität aus einer gasförmigen Kohlenwasserstoffeinspeisung (200) unter Verwendung einer Festoxidbrennstoffzelle SOFC (2), wobei das System umfasst:
- einen Wassergas-Shift-Reaktor (4),
- einen Reformer (3),
- die Festoxidbrennstoffzelle SOFC (2) umfassend eine Anodenseite (23) und eine Kathodenseite (21),
- einen Einlass (200a) für die gasförmige Kohlenwasserstoffeinspeisung (200),
- wobei der Reformer (3) mit einer wasserstoffangereicherten gasförmigen Kohlenwasserstoffeinspeisung (202) und einer Dampfeinspeisung (220) Fluid leitend verbunden ist, und wobei der Reformer (3) ein reformiertes Prozessgas (205) erzeugt, indem Methan und Dampf zumindest teilweise in Kohlenmonoxid und Wasserstoff umgewandelt wird;
- wobei die Anodenseite (23) der Festoxidbrennstoffzelle (2) Fluid leitend mit dem Reformer (3) ist zur Aufnahme des reformierten Prozessgases (205) und zur Umwandlung des reformierten Prozessgases (205) in Kombination mit Sauerstoff in ein Anodenabgas (208), das Dampf, Kohlendioxid und unkonvertiertes reformiertes Prozessgas (205) umfasst;
**dadurch gekennzeichnet, dass**
- der Wassergas-Shift-Reaktor (4) ein Wassergas-Shift-Membranreaktor (4) ist,
- dass es einen Auslass (211a) für einen kohlendioxidreichen Gasstrom (211) gibt,
- dass der Wassergas-Shift-Membranreaktor (4) eine Permeatseite (41), eine Zufuhrseite (44), einen Katalysator (43) und eine wasserstoffselektive Membran (42) zwischen der Permeatseite (41) und der Zuführseite (44) umfasst,
- dass die Permeatseite (41) eine Eingangsseite (41a) und eine Ausgangsseite (41b) aufweist, und die Zuführseite (44) eine Eingangsseite (44a) und eine Ausgangsseite (44b) aufweist,
- dass der Einlass (200a) Fluid leitend mit der Einlassseite (41a) der Permeatseite (41) verbunden ist,
- dass die Austrittsseite (41b) der Permeatseite (41), welche die wasserstoffangereicherte gasförmige Kohlenwasserstoffeinspeisung (202) bereitstellt, mit dem Reformer (3) Fluid leitend verbunden ist,
- dass die Eingangsseite (44a) der Einspeiseseite (44) des Wassergas-Shift-Membranreaktors (4) Fluid leitend mit der Festoxidbrennstoffzelle (1) verbunden ist zur Aufnahme des Anodenabgases (208), und zur Umwandlung von Kohlenmonoxid und Wasserdampf in konzentriertes Kohlendioxid und Wasserstoff in der Einspeiseseite (44), und zur Abtrennung des Wasserstoffs durch die Membran (42), zur Erzeugung einer wasserstoffangereicherten gasförmigen Einspeisung (202) auf der Permeatseite (41), so dass das Anodenabgas (208) von Wasserstoff und Kohlenmonoxid abgereichter ist, um den kohlendioxidreichen Gastrom (211) umfassend hauptsächlich Kohlendioxid und Dampf an der Zuführseite (44) zu erzeugen,
und dass die Austrittsseite (44b) der Zuführseite (44) mit dem Auslass (211a) Fluid leitend verbunden ist.

10. System nach Anspruch 9, wobei ein Kompressor (109) zwischen dem Wassergas-Shift-Membranreaktor (4) und dem Reformer (3) angeordnet ist, so dass die Austrittsseite (41b) der Permeatseite (41) mit dem Kompressor (109) Fluid leitend verbunden ist, und dass der Reformer (3) Fluid leitend mit der Austrittsseite des Kompressors (109) verbunden ist.

11. System nach Anspruch 9, wobei ein Kondensator (10) zwischen dem Wassergas-Shift-Membranreaktor (4) und dem Reformer (3) angeordnet ist, so dass die Austrittsseite (41b) der Permeatseite (41) mit dem Kondensator (10) Fluid leitend verbunden ist, und dass der Reformer (3) Fluid leitend mit der Austrittsseite des Kondensators (10) verbunden ist.

12. System nach einem der Ansprüche 9 bis 11, wobei die Membran (42) eine Membran (42a) auf der Basis einer Palladiumlegierung zur selektiven Entfernung von Wasserstoff ist.

13. System von einem der Ansprüche 9 bis 12, wobei die Eingangsseite (41a) der Permeatseite (41) des Wassergas-Shift-Membranreaktors (4) ebenfalls Fluid leitend mit einer Dampfversorgungseinheit (220a) verbunden ist.

14. System von einem der Ansprüche 9 bis 13, wobei ein Trennsystem (5) mit der Austrittsseite (44b) der Einspeiseseite (44) des Wassergas-Shift-Membranreaktors (4) Fluid leitend verbunden ist, um den kohlendioxidreichen Gasstrom (211) in das Trennsystem (5) einzuführen, um Dampf von dem kohlendioxidreichen Gasstrom (211) zu trennen, um das konzentrierte Kohlendioxid (435) bereitzustellen.

## Revendications

1. Procédé de production de dioxyde de carbone concentré (435) et d'électricité à partir d'une alimentation en hydrocarbures gazeux (200) en utilisant une pile à combustible à oxyde solide SOFC (2), le procédé comprenant les étapes suivantes :
- introduction d'une alimentation en hydrocarbures gazeux enrichis en hydrogène (202) dans un reformeur (3),
- introduction de vapeur (220) ;
- dans le reformeur (3), génération d'un gaz de processus reformé (205) en convertissant au moins en partie du méthane et de la vapeur (220) en du monoxyde de carbone et de l'hydrogène ;
- introduction du gaz de processus reformé (205) dans un côté d'anode de la pile à combustible à oxyde solide (2) ;
- dans la pile à combustible à oxyde solide (2), introduction d'air (100) dans un côté de cathode de la pile à combustible à oxyde solide (2) et conversion de l'hydrogène et du monoxyde de carbone du gaz de processus reformé (205) en combinaison avec de l'oxygène dans un gaz de dégagement d'anode (208) comprenant de la vapeur, du dioxyde de carbone et du gaz de processus non converti ;
**caractérisé par**
- l'introduction de l'alimentation en hydrocarbures gazeux (200) dans un côté de perméat (41) d'un réacteur à membrane à réaction du gaz à l'eau (4), l'alimentation en hydrocarbures gazeux (200) étant utilisée en tant que gaz de balayage (201) dans le côté de perméat (41) du réacteur à membrane à réaction du gaz à l'eau (4), et le gaz de balayage (201) étant de l'hydrogène enrichi dans le côté de perméat (41) du réacteur à membrane à réaction du gaz à l'eau (4) et quittant le réacteur à membrane à réaction du gaz à l'eau (4) sous forme de l'alimentation en hydrocarbures gazeux enrichis en hydrogène (202),
- l'introduction du gaz de dégagement d'anode (208) dans un côté d'alimentation (44) du réacteur à membrane à réaction du gaz à l'eau (4) ; et
- dans le côté d'alimentation (44) du réacteur à membrane à réaction du gaz à l'eau (4), la conversion du monoxyde de carbone et de la vapeur du gaz de dégagement d'anode (208) en dioxyde de carbone concentré et en hydrogène et l'appauvrissement du gaz de dégagement d'anode (208) en hydrogène pour créer un flux de gaz riche en dioxyde de carbone (211), et l'enrichissement du gaz de balayage (201) avec de l'hydrogène.

2. Procédé selon la revendication 1, dans lequel de la vapeur (220) est ajoutée à l'alimentation en hydrocarbures gazeux (200).

3. Procédé selon la revendication 1, dans lequel de la vapeur (220) est introduite dans le reformeur (3).

4. Procédé selon la revendication 1, dans lequel de la vapeur (220) est ajoutée à l'alimentation en hydrocarbures gazeux enrichis en hydrogène (202).

5. Procédé selon l'une quelconque des revendications précédentes, dans lequel l'alimentation en hydrocarbures gazeux enrichis en hydrogène (202) est comprimée à une pression de fonctionnement de l'ordre de 2 à 8 bars avant d'entrer dans le reformeur (3), et dans lequel l'air (100) est de préférence comprimé à la même pression de fonctionnement avant d'entrer dans la pile à combustible à oxyde solide (2).

6. Procédé selon la revendication 2, dans lequel une quantité de vapeur (220) est ajoutée avec un rapport vapeur à carbone d'au moins 15, et dans lequel l'alimentation en hydrocarbures gazeux enrichis en hydrogène (202) est refroidie après avoir quitté le réacteur à membrane à réaction du gaz à l'eau (4) de manière à condenser et à séparer une quantité d'eau en excès (411), de sorte que l'alimentation en hydrocarbures gazeux enrichis en hydrogène (202), après condensation et séparation, présente un rapport vapeur à carbone de 2 à 4.

7. Procédé selon l'une quelconque des revendications précédentes, dans lequel le réacteur à membrane à réaction du gaz à l'eau (4) est un réacteur à membrane à réaction du gaz à l'eau (4) intégré, avec une membrane à base d'alliage de palladium (42a) pour éliminer de manière sélective l'hydrogène du gaz de dégagement d'anode (208).

8. Procédé selon l'une quelconque des revendications précédentes, dans lequel le flux de gaz riche en dioxyde de carbone (211) est introduit dans un système de séparation (5) ;
- dans le système de séparation (5), la vapeur est séparée du flux de gaz riche en dioxyde de carbone (211), le dioxyde de carbone étant comprimé dans un compresseur (403, 415) pour fournir un dioxyde de carbone concentré comprimé (435).

9. Système de production de dioxyde de carbone concentré (435) et d'électricité à partir d'une alimentation en hydrocarbures gazeux (200) en utilisant une pile à combustible à oxyde solide SOFC (2), le système comprenant :
- un réacteur à réaction du gaz à l'eau (4),
- un reformeur (3),
- la pile à combustible à oxyde solide SOFC (2) comprenant un côté d'anode (23) et un côté de cathode (21),
- une entrée (200a) pour l'alimentation en hydrocarbures gazeux (200),
- le reformeur (3) étant connecté fluidiquement à une alimentation en hydrocarbures gazeux enrichis en hydrogène (202) et à une alimentation en vapeur (220), et le reformeur (3) générant un gaz de processus reformé (205) en convertissant au moins en partie le méthane et la vapeur en du monoxyde de carbone et de l'hydrogène ;
- le côté d'anode (23) de la pile à combustible à oxyde solide (2) étant connecté fluidiquement au reformeur (3) de manière à recevoir le gaz de processus reformé (205) et à convertir le gaz de processus reformé (205) en combinaison avec de l'oxygène pour former un gaz de dégagement d'anode (208) comprenant de la vapeur, du dioxyde de carbone et du gaz de processus reformé non converti (205) ;
**caractérisé en ce que**
- le réacteur à réaction du gaz à l'eau (4) est un réacteur à membrane à réaction du gaz à l'eau (4),
- il est prévu une sortie (211a) pour un flux de gaz riche en dioxyde de carbone (211),
- le réacteur à membrane à réaction du gaz à l'eau (4) comprend un côté de perméat (41), un côté d'alimentation (44), un catalyseur (43) et une membrane sélective d'hydrogène (42) entre le côté de perméat (41) et le côté d'alimentation (44),
- le côté de perméat (41) ayant un côté d'entrée (41a) et un côté de sortie (41b) et le côté d'alimentation (44) ayant un côté d'entrée (44a) et un côté de sortie (44b),
- l'entrée (200a) est connectée fluidiquement au côté d'entrée (41a) du côté de perméat (41),
- le côté de sortie (41b) du côté de perméat (41) fournissant l'alimentation en hydrocarbures gazeux enrichis en hydrogène (202) et étant connecté fluidiquement au reformeur (3),
- le côté d'entrée (44a) du côté d'alimentation (44) du réacteur à membrane à réaction du gaz à l'eau (4) est connecté fluidiquement à la pile à combustible à oxyde solide (2) pour recevoir le gaz de dégagement d'anode (208), et pour convertir le monoxyde de carbone et la vapeur en dioxyde de carbone concentré et en hydrogène dans le côté d'alimentation (44), et pour séparer l'hydrogène par le biais de la membrane (42) afin de créer une alimentation gazeuse enrichie en hydrogène (202) du côté du perméat (41), de telle sorte que le gaz de dégagement d'anode (208) soit appauvri en hydrogène et en monoxyde de carbone pour créer le flux de gaz riche en dioxyde de carbone (211) comprenant principalement du dioxyde de carbone et de la vapeur du côté de l'alimentation (44),
et le côté de sortie (44b) du côté d'alimentation (44) est connecté fluidiquement à la sortie (211a).

10. Système selon la revendication 9, dans lequel un compresseur (109) est disposé entre le réacteur à membrane à réaction du gaz à l'eau (4) et le reformeur (3), de telle sorte que le côté de sortie (41b) du côté du perméat (41) soit connecté fluidiquement au compresseur (109), et que le reformeur (3) soit connecté fluidiquement au côté de sortie du compresseur (109).

11. Système selon la revendication 9, dans lequel un condenseur (10) est disposé entre le réacteur à membrane à réaction du gaz à l'eau (4) et le reformeur (3), de telle sorte que le côté de sortie (41b) du côté du perméat (41) soit connecté fluidiquement au condenseur (10), et que le reformeur (3) soit connecté fluidiquement au côté de sortie du condenseur (10).

12. Système selon l'une quelconque des revendications 9 à 11, dans lequel la membrane (42) est une membrane à base d'alliage de palladium (42a) pour éliminer de manière sélective l'hydrogène.

13. Système selon l'une quelconque des revendications 9 à 12, dans lequel le côté d'entrée (41a) du côté du perméat (41) du réacteur à membrane à réaction du gaz à l'eau (4) est également connecté fluidiquement à une unité (220a) fournissant de la vapeur.

14. Système selon l'une quelconque des revendications 9 à 13, dans lequel un système de séparation (5) est connecté fluidiquement au côté de sortie (44b) du côté d'alimentation (44) du réacteur à membrane à réaction du gaz à l'eau (4) afin d'introduire le flux de gaz riche en dioxyde de carbone (211) dans le système de séparation (5) pour séparer la vapeur du flux de gaz riche en dioxyde de carbone (211) pour fournir le dioxyde de carbone concentré (435).
